(19) Europäisches Patentamt / European Patent Office / Office européen des brevets

(11) **EP 2 452 160 B1**

(12) **FASCICULE DE BREVET EUROPEEN**

(45) Date de publication et mention de la délivrance du brevet:
**28.10.2015 Bulletin 2015/44**

(21) Numéro de dépôt: **10742215.6**

(22) Date de dépôt: **07.07.2010**

(51) Int Cl.:
**B62D 15/02** *(2006.01)* **G01D 5/249** *(2006.01)*
**G01B 7/30** *(2006.01)* **B62D 6/10** *(2006.01)*

(86) Numéro de dépôt international:
**PCT/FR2010/051431**

(87) Numéro de publication internationale:
**WO 2011/004120 (13.01.2011 Gazette 2011/02)**

(54) **CAPTEUR DE POSITION ABSOLUE ET MULTI-PÉRIODIQUE**

MULTIPERIODISCHER ABSOLUTER POSITIONSSENSOR

MULTI-PERIODIC ABSOLUTE POSITION SENSOR

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **07.07.2009 FR 0903349**

(43) Date de publication de la demande:
**16.05.2012 Bulletin 2012/20**

(73) Titulaire: **Moving Magnet Technologies (MMT)
25000 Besançon (FR)**

(72) Inventeurs:
• **MASSON, Gérald
  F-25000 Besançon (FR)**
• **BIWERSI, Stéphane
  F-25140 Frambouhans (FR)**

(74) Mandataire: **Fidal Innovation
Tour Prisma
4/6 avenue d'Alsace
92982 Paris La Défense Cedex (FR)**

(56) Documents cités:
**EP-A1- 1 167 927        EP-A1- 1 203 932
WO-A1-99/11999        DE-A1-102006 032 266
DE-A1-102007 039 051        US-A1- 2008 150 519**

## Description

### DOMAINE TECHNIQUE DE L'INVENTION

La présente invention concerne le domaine des capteurs de position magnétiques comportant au moins un aimant permanent.

Plus précisément la présente invention concerne le domaine des capteurs de position linéaires ou rotatifs magnétiques pour des angles supérieurs à une dizaine de degrés et pouvant aller jusqu'à plusieurs tours. Un usage particulièrement intéressant réside dans les capteurs de position destinés à la mesure de la position angulaire d'une colonne de direction pour automobile, sans que cette application ne soit exclusive.

L'invention concerne également le domaine des dispositifs magnétiques de détection d'un couple entre un premier arbre et un deuxième arbre reliés par une barre de torsion, notamment destiné à une colonne de direction automobile,

### ETAT DE LA TECHNIQUE ANTERIEURE

Dans le cas de cette application, la position angulaire de la colonne de la direction et du volant est une information nécessaire pour des fonctions telles que le contrôle électronique de la stabilité du véhicule (en anglais ESP : Electronic Stability Program) et la direction assistée électrique (en anglais EPS : Electric Power Steering). L'information de l'angle de direction, et donc des roues, peut également être utilisée pour des fonctions complémentaires telles que les phares directionnels, le contrôle de trajectoire, le parcage automatique etc...

Un capteur monotour ne peut, à lui seul, détecter la position de la colonne de la majorité des automobiles dont le volant doit pouvoir tourner de plus d'un tour. Une solution peut être d'associer un capteur 360° à un « top tour » pour savoir dans quel tour le volant se trouve. Ceci est par exemple décrit dans la demande WO07014599 ou EP1167927. Ces systèmes font l'hypothèse d'une position initiale lors de la mise sous tension. Toutes les positions qui s'ensuivent sont relatives à cette position de départ. Le problème posé par ce type de système est donc que cette position initiale est redéfinie à chaque fois que le contact de l'automobile est établi. Si ce système n'a pas de mémoire de la dernière position de l'angle volant ou si l'angle est changé quand le contact est coupé, l'angle indiqué à la mise sous contact sera erroné.

L'information sur l'intensité de champ magnétique émis par le premier capteur est générée par l'information de tension dans l'unité de mesure.

La valeur maximale de cette information est enregistrée pour marquer une position certain angle de la rotation.

L'information sur l'intensité de champ magnétique émis par le deuxième capteur est générée par une information de tension amplifié dans l'unité de mesure.

Lorsque les informations de tension du premier capteur passe le point de tension maximale (Ux) et lorsque l'information de tension amplifié du second capteur dépasse (Ux), l'unité de mesure de tension inverse le chiffre du premier capteur 180 DEG autour de l'axe de tension ( ux) pour produire un signal de tension en ordre ascendant par une révolution complète dans la première direction.

Les spécifications pour une application colonne sont très sévères. En effet, cette application nécessite un capteur absolu pouvant aller jusqu'à +/-720° (+/- 2 tours) voire +/-1440° (+/- 4 tours) pour une précision inférieure à +/- 1° et une résolution inférieure a 0.1°.

Pour ce faire, différentes solutions multitour absolues existent pour la mesure d'angle et mettent en oeuvre des technologies diverses : potentiométriques, optiques, inductives ou encore magnétiques.

Les solutions optiques telles que décrites par exemple dans les brevets EP1 219 527 ou US 6,848,187 sont complexes, coûteuses et peuvent s'avérer incompatibles avec un montage dans le compartiment moteur du fait de leur incompatibilité avec les conditions de température et de d'environnement.

Les solutions inductives, telles que décrites par exemple dans le brevet US 6,384,598, sont très coûteuses en termes de développement et de mise au point sur une colonne de direction.

Les solutions potentiométriques ont de grands avantages dont principalement leur coût et leur simplicité. On connaît par exemple, dans l'état de la technique, le brevet US 5,200,747 qui présente un capteur multitour absolu, composé de deux capteurs 360° potentiométriques.

On peut cependant noter un inconvénient majeur à cette solution lié au frottement entre le contact et les pistes du potentiomètre, ce qui réduit la durée de vie du capteur. De plus, les pistes peuvent se détériorer au contact de la poussière, de l'huile ou d'autres liquides. La tendance est ainsi au remplacement des potentiomètres par des systèmes sans contact.

On connaît aussi dans d'état de la technique des solutions sans contact magnétiques qui calculent la position absolue d'un organe rotatif à partir du déphasage continu de deux capteurs rotatifs, tels que décrits par exemple dans les brevets et demandes US 2005/000288286, JP 2006/119082, US 6,941,241, US 5,930,905 et US 6,466,889. Le principe de ces capteurs est identique : ils sont composés d'une roue dentée liée à la colonne qui entraîne 2 pignons au nombre de dents légèrement différent, solidaires chacun d'un aimant.

La rotation de chaque aimant est détectée par une sonde magnétosensible puis les signaux déphasés sont traités par un algorithme. La précision de l'angle absolu mesuré dépend donc de la différence de deux signaux issus de deux capteurs différents et également de l'algorithme de calcul. La soustraction de deux signaux pour obtenir une seule mesure est un gros inconvénient. Cela diminue la précision par deux par rapport à la précision d'un des deux capteurs pris seuls. La moindre erreur d'un des deux capteurs, le moindre déphasage mécanique, le moindre jeu dans un des pignons provoque une erreur de mesure de l'angle. De plus, cela nécessite un algorithme très élaboré pour calculer l'angle absolu de l'organe rotatif. L'emploi de réducteurs mécaniques n'est pas une solution entièrement sans contact et ajoute donc de la friction dans le système (les pignons des engrenages sont des pièces d'usure et limitent donc la durée de vie). De plus, l'ajout de ces pignons ainsi que la complexité d'assemblage du capteur complet rend l'ensemble coûteux et ne permet pas d'avoir un encombrement limité.

Ce même principe de mesure du déphasage continu pour en déduire la position de l'organe rotatif se retrouve dans les brevets ou demandes de brevets suivants: US 2003/145663, EP 1 353 151, US 6,515,571, US 7,215,112. Ces documents présentent 2 aimants multipolaires ou 1 aimant avec 2 pistes multipolaires qui possèdent un nombre de paires de pôles légèrement différent pour créer un déphasage continu en fonction de l'angle de l'organe rotatif à détecter. On retrouve également ce principe dans la demande de brevet WO2008101702 avec un seul aimant et une seule piste mais avec des pôles de largeur angulaire différents. Ces principes à aimant multipolaire ont les mêmes inconvénients que le principe évoqué précédemment reprenant le principe de deux roues dentées au nombre de dents légèrement différent.

On connaît aussi, dans l'état de la technique, la demande WO 2005/076860 décrivant un capteur couple et position multitour absolu, où la mesure de la position de l'organe rotatif suit le principe du brevet US 5,200,747, c'est-à-dire que la mesure de position est réalisée par le biais de deux capteurs : un capteur 360° directement lié à l'organe rotatif et un deuxième capteur incrémental entraîné par une roue dite de Genève. A la différence du brevet US 5,200,747, les capteurs utilisés ne sont pas potentiométriques mais de type magnétiques sans contact. Chacun des deux capteurs présente un aimant bague et deux éléments magnétosensibles espacés de 90°, qui mesurent la composante radiale du champ généré par l'aimant et qui conduit à deux signaux sinusoïdaux en quadrature qui sont décodés pour déterminer la position sur 360 degrés.

Cette demande WO 2005/076860 résout le problème de mesure avec contact du brevet US 5,200,747, mais on retrouve toutefois l'inconvénient majeur de l'emploi de réducteurs mécaniques qui complexifie et pose des problèmes de friction, d'assemblage et de durée de vie. Un autre inconvénient de cette solution est la présence de deux sondes, ce qui peut induire une erreur de mesure due au mauvais placement d'une sonde par rapport à l'autre. Egalement, la présence de deux circuits intégrés décalés spatialement de 90° augmente le coût final du capteur car la surface de circuit imprimé peut être importante et le nombre de connexion est augmenté.

On connaît par ailleurs, dans l'état de la technique, la demande de brevet WO 2007/057563 de la demanderesse qui décrit un capteur de position rotatif sur 360° et qui utilise une sonde magnétosensible afin de déterminer la position angulaire d'un aimant bague ou disque aimanté sensiblement diamétralement. Dans ce brevet, la sonde sensible à la direction du champ magnétique généré par l'aimant est placée à l'extérieur de l'aimant permettant ainsi d'obtenir un capteur rotatif à arbre traversant destiné par exemple à mesurer l'angle de rotation d'une colonne de direction. De plus, il est décrit dans cette demande l'utilisation du capteur associé à une réduction du mouvement afin de ramener la rotation sur plusieurs tours à une rotation inférieure ou égale à un tour au niveau du capteur. L'inconvénient majeur de cette solution est le fait d'utiliser une réduction de rapport n, ce qui diminue la résolution et la précision d'autant, ce qui peut se révéler insuffisant pour une application telle que la colonne de direction où la précision et la résolution demandées sont très élevées. De plus, cette solution utilise, là encore, un système de réduction mécanique qui a les mêmes inconvénients que ceux développés ci-dessus.

On connaît par ailleurs, dans l'état de la technique, la demande de brevet WO 2009/047401, déposée par la demanderesse, qui décrit un capteur de position 360° sans contact pour réaliser une détection multitour absolu. Le premier capteur sans contact est utilisé pour mesurer l'angle de rotation de l'organe rotatif de 0 à 360° et le second capteur est utilisé pour déterminer le nombre de rotations complètes de l'organe rotatif. Un système mécanique de réduction continue de rapport n est intégré entre les deux capteurs. Cette solution permet ainsi d'augmenter la fiabilité des mesures tout en l'adaptant avantageusement à différentes configurations géométriques (capteur 2 tours, 3 tours etc.... avec la même précision et résolution quelque soit le nombre de tour), notamment dans le cas d'un dispositif à axe traversant. Cependant, la précision du capteur est déterminée par la précision du capteur qui mesure l'angle absolu de rotation de l'organe rotatif, précision limitée a +/-2deg, ce qui est insuffisant pour les applications destinées aux colonnes de direction automobile. Mais surtout cette solution utilise elle aussi un système de réducteurs mécaniques avec les inconvénients cités précédemment.

On connaît de même, dans l'état de la technique, le brevet DE102007039051 qui décrit une technologie compte-tours, basée sur l'utilisation d'un fil de Wiegandt. A chaque fois qu'une transition magnétique passe devant le fil, l'orientation soudaine des domaines magnétiques du fil induit une tension dans la bobine l'encerclant, tension qui est utilisée par une unité de comptage pour incrémenter un nombre de tours et le stocker dans une mémoire non volatile. Cette méthode est cependant tributaire d'un ensemble fil de Wiegand (détection du passage des aimants) + bobine (détection de la modification magnétique dans le fil) + unité de comptage (qui envoie l'information d'un tour détecté) + mémoire non volatile (qui stocke le nombre de tours effectués) et nécessite donc beaucoup d'éléments pour fonctionner. De plus, dans la configuration décrite, le capteur ne peut être réalisé qu'au bout d'un axe sans possibilité donnée quant à une réalisation à axe traversant. Enfin, pour compter le nombre de tours et savoir si ce nombre augmente ou diminue, le capteur doit être alimenté en courant pour que les sondes auxiliaires déterminent le sens de rotation.

On connaît aussi dans l'état de la technique des capteurs de couple magnétique associés à des solutions compte-tour comme par exemple celui décrit dans le brevet US 2006/0236784. Il présente simplement la mise bout à bout d'un capteur de couple magnétique et d'un capteur de position multitour magnétique. Ce qui donne lieu à un encombrement important, à l'obligation d'utiliser plusieurs circuits imprimés ou un circuit imprimé souple car les éléments de Hall se trouvent dans des plans différents et à une interaction magnétique entre les capteurs de couple et de position.

De plus, nous pouvons trouver dans l'état de l'art un brevet de la demanderesse WO 2009/047401 qui décrit un capteur de couple et de position où l'aimant du capteur de position est également astucieusement intégré à la partie statorique. Cependant, le décomptage des tours se fait à l'aide de systèmes de réduction mécanique qui a les inconvénients déjà cités dans la première partie de ce brevet. De plus, la précision obtenue avec ce capteur est +/- 0.5% sur 360 degrés (soit une précision angulaire de +/-2 degrés) qui n'est pas assez bonne pour les applications colonne de direction.

Le brevet EP1167927 décrit un dispositif de détermination de la position angulaire absolue (0a) d'un s organe tournant par rapport à une structure fixe au moyen d'un capteur de position angulaire relative (Or), comprenant :

- un anneau magnétique multipolaire circulaire mobile en rotation, destiné à être solidaire de l'organe tournant. L'anneau multipolaire est apte à effectuer, conjointement à l'organe tournant, une pluralité de io tours autour de son axe de rotation (R) à partir d'une position angulaire dite de référence. Cet anneau comprend une piste principale et une piste de référence dite " top tour ", les pistes principale et " top tour " étant concentriques sur l'anneau magnétique.
- un capteur magnétique fixe, destiné à être solidaire de la structure fixe, disposé en regard et à distance d'entrefer de l'anneau multipolaire, et comprenant au moins trois éléments sensibles dont au moins deux sont positionnés en regard de la piste principale de sorte à délivrer deux signaux électriques (A, B) périodiques en quadrature et au moins un est positionné en regard de la piste de référence de sorte à délivrer un signal électrique (C) de référence dit " top tour ", sous forme d'une impulsion électrique par tour du codeur multipolaire. Cette impulsion correspond à une position angulaire dite " top tour ", de l'organe tournant par rapport à la structure fixe, le décalage angulaire entre la dite position angulaire de référence et la dite position angulaire, top tour" étant dit " offset " (0offset);
- des moyens de comptage des impulsions issues des signaux (A, B) aptes à permettre la détermination de la position angulaire relative (Or) de l'anneau multipolaire et les variations de cette position angulaire relative (Or);
- des moyens de détection d'une position angulaire (00o) de l'anneau multipolaire proche de la dite position angulaire de référence;
- des moyens de recalage de la position angulaire absolue (Oa) de l'anneau, actionnés par les moyens de détection, aptes à affecter, lors de la détection d'une impulsion du signal <" top tour " (C), la valeur d'offset (0offset) à la valeur de la position angulaire absolue (Oa) de l'anneau multipolaire par rapport à sa position angulaire de référence; et des moyens de détermination de la position angulaire absolue (Oa) de l'anneau sur l'ensemble des tours effectué par l'organe tournant, à partir de la valeur d'offset (0offset) et des variations de la position angulaire relative (Or).

On connaît également le brevet WO9911999 décrivant un appareil pour mesurer une mouvement de rotation dans lequel le dispositif d'échantillonnage de la rotation de la pièce à être mesurée comprend une partie qui génère un champ magnétique, et une partie placée dans le champ magnétique mentionnés, qui présente au moins le premier et le second capteur de calibrage l'intensité de champ de sorte que les parties sont en rotation l'une par rapport à l'autre lorsque la pièce à être mesurée est en rotation

Le brevet allemand DE102007039051 décrit capteur de position absolue haute résolution, comprenant: un arbre, au moins un aimant d'excitation mobile fixé audit arbre; un élément à effet Wiegand comprend un élément ferromagnétique, un compteur de rotation, ladite unité de rotation compteur ayant une mémoire non volatile de données. Un premier capteur comprend une bobine d'induction enroulée autour de ladite bobine ferromagnétique, ladite bobine d'induction fournit une première sortie, ladite première sortie fournit un courant de sortie, un second capteur, ledit second capteur fournit une seconde sortie;

un troisième capteur pour une résolution fine d'une révolution, ledit troisième capteur fournit une troisième sortie. Un dispositif logique de commande pour traiter ledit premier signal de sortie provenant dudit premier capteur et ledit second signal de sortie provenant dudit second capteur; un circuit de stockage d'énergie; un contrôleur de puissance en communication électrique avec ladite première sortie dudit premier capteur, ledit second capteur, ledit compteur, et ledit circuit de stockage d'énergie; ledit contrôleur de puissance de fonctionnement sans énergie électrique extérieure, ledit circuit de stockage d'énergie recevant de l'énergie à partir dudit premier capteur;

une [mu]-contrôleur pour l'analyse des informations de résolution fine à partir de ladite troisième sortie dudit troisième détecteur, ledit [mu]-contrôleur en communication électrique avec ledit dispositif logique de commande, et ledit contrôleur de puissance, au moins l'un desdits: élément Wiegand, ledit premier capteur, ledit second capteur, ledit troisième capteur, ledit dispositif logique de commande, ledit circuit de stockage d'énergie, ledit contrôleur de puissance, compteur, ledit compteur ayant une unité de mémoire non volatile de données, ledit troisième capteur pour une résolution fine d'une révolution, ladite énergie Circuit de stockage, et, ledit [mu]-contrôleur, est intégré dans un circuit intégré dans un substrat de puce / semiconducteur, et, ledit compteur détermine le nombre de tours et la position dudit arbre.

On connaît aussi le brevet américain US2008150519 divulguant un capteur d'angle de braquage générant deux signaux de mesure d'angle absolu sur une plage angulaire de 360 degrés comprenant un premier rotor d'amortissement étant disposé sur une extrémité d'un arbre d'entrée de colonne de direction divisée par un élément de torsion. Un second rotor d'amortissement étant disposé sur une extrémité d'un arbre de sortie de la colonne de direction. Au moins un support est fixée à un boîtier de la colonne de direction et à travers lequel la colonne de direction passe à un angle droit, l'au moins un support étant muni d'bobines plates dans une plage d'angle complet et au moins un élément passif d'actionnement, sans structures répétées périodiquement, étant supporté sur chacun desdits premier et second rotors d'amortissement, les éléments d'actionnement étant en deux endroits différents de ladite plage d'angle de agissant sur les bobines plates de l'au moins un support.

Le brevet EP1203932 décrit un capteur couplé à un circuit d'évaluation pour traiter des signaux simultanés fournis par les capteurs, pour indiquer la position de rotation d'un élément de rotation par rapport à une position de référence. Un système d'alimentation en énergie fournit des impulsions d'énergie pour le dispositif de détection à une fréquence de répétition suffisante pour la détection du sens de rotation de l'élément de rotation de la plage d'angle de détectée entre des impulsions successives d'énergie.

Le brevet allemand DE102006032266 décrit un dispositif comprenant un ensemble capteur comprenant au moins un élément de capteur; un assemblage de capteur supplémentaire comprenant au moins un élément capteur additionnel; un commutateur, dans l'élément de couplage l'ensemble capteur additionnel à l'ensemble capteur sensible à un commutateur en signaux pour réaliser un assemblage de capteur globale comprenant une demande de puissance réduite.

**EXPOSE DE L'INVENTION**

La présente invention propose de répondre aux problèmes posés par l'art antérieur en réalisant un capteur de position sans contact présentant une fiabilité et une précision accrues.

Pour ce faire, l'invention propose un capteur magnétique de position, comportant au moins une unité aimantée, une première sonde magnétosensible et une deuxième sonde magnétosensible ; les première et deuxième sondes magnétosensibles étant fixes l'une par rapport à l'autre ; l'unité aimantée étant mobile vis-à-vis de ces première et deuxième sondes magnétosensibles sur une course de déplacement et présentant à chaque instant une position absolue ; ladite unité aimantée produisant au voisinage de ladite première sonde magnétosensible un champ magnétique présentant une composante normale d'une part, et au moins une composante tangentielle ou transversale d'autre part, variant de façon sinusoïdale et périodique sur N périodes réparties sur la course de déplacement, N étant un nombre supérieur à 1 ; ladite première sonde magnétosensible étant apte mesurer au moins deux des trois composantes du champ magnétique de sorte à déterminer une première donnée relative à la position de l'unité aimantée. La deuxième sonde magnétosensible est apte à mesurer de manière absolue, incrémentale et réversible un nombre de rotations complètes du champ magnétique de sorte à déterminer une deuxième donnée relative à la position de l'unité aimanté, que cette deuxième sonde magnétosensible soit alimentée ou non et le capteur comportant un module de calcul de la position absolue de l'unité aimanté à partir des première et deuxième données.

Dans un cas général de réalisation du capteur de position, une première sonde magnétosensible mesure deux des trois composantes (ou mesure l'angle directement) du champ magnétique généré par l'unitée aimantée (1) et décode la position de l'unitée aimantée à partir de ces deux composantes dont les amplitudes sont en général différentes, nécessitant de normaliser les deux composantes utilisées pour pouvoir faire le calcul de l'arc tangente pour en déduire la position. Ces fonctions d'arc tangente et de normalisation sont réalisées soit par un élément séparé ou directement par une sonde (par exemple : MELEXIS 90316, HAL 3625) intégrant la mesure des deux composantes du champ, le calcul d'arc tangente et la normalisation des deux composantes du champ. Il est possible de faire des développements particuliers où les composantes du champ auraient sensiblement les mêmes valeurs, par exemple en choisissant convenablement la position et l'orientation de la sonde, en réalisant des géométries d'aimant particulières, en réalisant des aimantations particulières, ou enfin en plaçant des concentrateurs de champ au niveau de la première sonde. En sortie de cette première sonde après décodage de la position, un signal linéaire et périodique est obtenu en fonction de la position de l'unité aimantée par rapport à cette première sonde.

Une deuxième sonde magnétosensible est alors utilisée pour discriminer la période dans laquelle on se trouve et ainsi déterminer de façon absolue la position de l'unité aimantée par rapport aux sondes. En effet, le signal de sortie se répétant n fois sur la course désirée, nous ne pouvons pas, juste avec le premier signal issu de la première sonde, en déduire la position de l'unité aimantée, c'est pourquoi cette invention se propose de rajouter, une deuxième sonde qui permet de définir dans quelle portion linéaire on se trouve à partir du même aimant que celui qui génère le champ magnétique vu par la première sonde. A titre d'exemple, on peut utiliser un composant basé sur la rotation des moments magnétiques (comme décrit dans les brevets EP1532425B1 et EP1740909B1). Les domaines magnétiques tournent continûment en même temps que la rotation du champ magnétique généré par l'unité aimantée dans lequel il se trouve mais se propagent au sein d'un circuit magnétique uniquement à chaque rotation du champ magnétique pour obtenir, au final et en sortie de traitement, un signal qui s'incrémente ou se décrémente de façon discrète mais absolu tous les 360 degrés de rotation du champ magnétique. Cela permet ainsi de discriminer de manière absolue la période à l'intérieur de laquelle on se trouve. De plus, comme un tel composant est basé sur la rotation des domaines magnétiques, même lorsque la sonde est non alimentée et qu'il y a un déplacement entre l'aimant et cette deuxième sonde magnétosensible, dite ASIC, les domaines magnétiques tournent et se propagent plus ou moins en fonction de ce déplacement. Dès lors que le contact électrique est établi, aucune position n'a alors été perdue. On dit communément que ce système est TPO (« True Power On ») et fonctionne dans les 2 directions de mouvement sans apporter d'hystérésis.

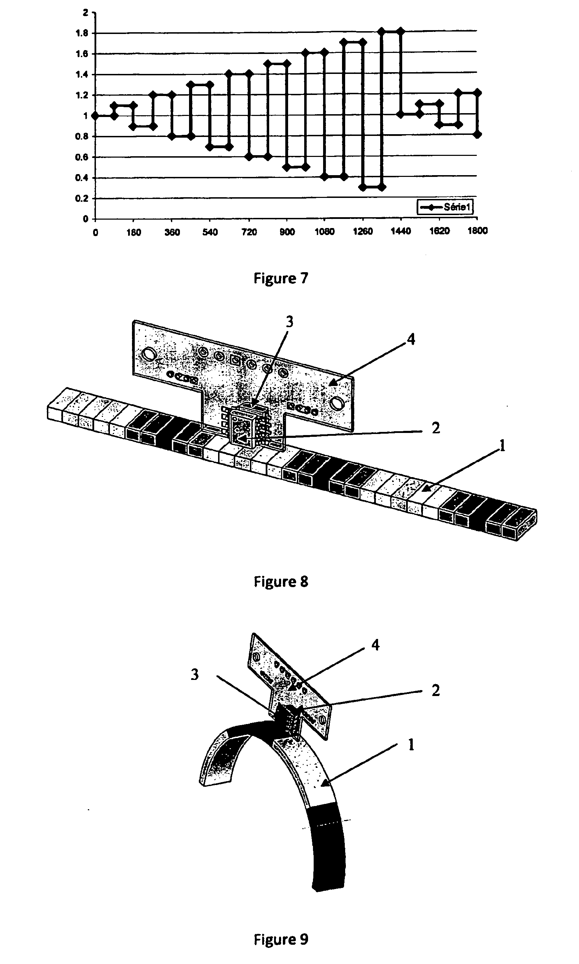

A la différence du brevet DE 102007039051, où l'ensemble compte-tours nécessite l'envoi, par la bobine associée au fil de Wiegand, d'impulsions électriques adressant une mémoire non-volatile, le présent composant utilisé permet, à lui seul, la mesure et le comptage du nombre de tours par modification de ses propriétés physiques (voir figure 7). L'ensemble réalisé est ainsi compact et permet d'être déporté en périphérie de l'aimant dans le cas où la détection d'un arbre traversant est requise. De plus, il permet de compter le nombre de tours effectué et le sens dans lequel les tours sont réalisés (incrément ou décrément), ceci sans nécessiter d'alimentation électrique du capteur (fonctionnement en mode « True Power On » ou TPO).

La solution proposée par la présente demande permet d'obtenir une solution totalement sans contact et donc de s'affranchir de pièces mécaniques supplémentaires et de simplifier le capteur, de diminuer son coût de revient tout en augmentant sa précision. Cette solution permet ainsi d'augmenter la fiabilité des mesures tout en l'adaptant avantageusement à différentes configurations géométriques (capteur 2 tours, 3 tours etc.) et en l'adaptant à la précision souhaitée, notamment dans le cas d'un dispositif à axe traversant.

Selon des modes de réalisation particuliers :

- l'unité aimantée présente une direction d'aimantation variable de façon continue suivant la direction de déplacement, comme par exemple décrit dans la demande de brevet FR2898189 de la demanderesse ;

- l'unité aimantée présente une direction d'aimantation variant linéairement suivant la direction de déplacement ;

- l'unité aimantée présente une alternance de pôles aimantés Nord-Sud ;

- l'unité aimantée présente une aimantation unidirectionnelle et présente au moins une de ses dimensions qui varie de façon non constante, de sorte à générer, à son voisinage, une variation sinusoïdale de ses composantes tangentielles et normale ou axiale, comme présenté dans la demande de brevet FR2909170.

D'autre part, selon des modes de réalisation alternatifs :

- l'unité aimantée présente une forme annulaire et une direction d'aimantation dans le plan perpendiculaire à l'axe de rotation de l'unité aimantée ;

- l'unité aimantée présente une forme de disque et une direction d'aimantation perpendiculaire au plan du disque.

Précisons que tout moyen connu de l'art antérieur permettant de réaliser une variation sinusoïdale des composantes du champ magnétique produit par l'unité aimantée à son voisinage peut être envisagé dans le cadre de cette invention.

Au voisinage de ces aimants, le champ magnétique engendre des composantes tangentielle (Bt), normale (Bn) et transversale (Bz) sensiblement sinusoïdales de période $2pi/N$. Les composantes Bn et Bz ont la même phase, alors que la composante Bt est déphasée d'un quart de période. On utilise une première sonde magnétosensible qui intègre la mesure de deux composantes du champ, le calcul d'arc tangente et la normalisation des deux composantes du champ si nécessaire.

Si l'on mesure les composantes Bt et Bn dans un point de l'espace qui entoure l'aimant à l'aide de la première sonde, il est possible de connaître la position linéaire de l'aimant à $2 pi/n$ près, en appliquant la formule suivante :

$$\theta \;=\; \arctan(Gt\,\frac{Bt}{Bn}) \quad \text{à 2pi/n près avec :}$$

- $\theta$ : position angulaire de l'aimant et Gt un gain pour amplifier la composante tangentielle si besoin.

Dans un cas plus général, on peut utiliser la formule suivante :

$$\theta \;=\; \arctan(G\,\frac{Bt}{Bnz}) \qquad \text{avec } Bnz \;=\; kn.Bn + kz.Bz$$

Dans un cas général, le décodage de la position angulaire de l'unité aimantée à partir de ces deux composantes dont les amplitudes sont en général différentes nécessite de normaliser les deux composantes utilisées pour pouvoir faire le calcul de l'arc tangente pour en déduire la position linéaire. La précision des parties linéaires est de l'ordre +/- 0.3% sur une période de longueur 2pi/N. Ainsi plus la période est faible autrement dit plus N est grand, alors plus la précision angulaire sera grande et nous pouvons donc ajuster le nombre de période N a une précision souhaitée.

De préférence, les première et deuxième sondes magnétosensibles sont positionnées sur un seul et même circuit imprimé.

Cette sonde (3) peut être limitée par le nombre Nr de rotations complètes du champ qu'elle peut distinguer en fonction de l'application. Par exemple, si elle est intégrée en face de notre unité aimantée qui comporte N périodes, elle délivrera au maximum Nr valeurs d'incréments différents et donc au final le capteur sera absolu et de très haute précision sur Nr/N tours. Si nous voulons ainsi un capteur absolu sur un nombre de tour déterminé, il faudra ajuster le nombre de périodes de l'aimantation pour obtenir un capteur absolu sur le bon nombre de tours.

Selon un mode de réalisation particulier, l'invention peut être envisagée en application linéaire. L'unité aimantée s'étend alors linéairement suivant la direction de déplacement.

Dans cette version, on retrouve un aimant, sous forme d'une bande dont la direction d'aimantation varie continûment suivant la direction de déplacement. Une première sonde mesure les composantes radiale, normale et axiale afin de déterminer la position de l'aimant, à l'intérieur d'une période. Une deuxième sonde incrémentale absolue est utilisée pour compter le nombre de rotations du champ magnétique émis par l'unité aimantée.

Selon un autre mode de réalisation l'unité aimantée présente une forme s'étendant sur une largeur angulaire inférieure à 360°. De cette façon, le signal de position obtenu par la combinaison des signaux des première et deuxième sondes est très précis.

La présente invention propose également de réaliser un capteur de couple comportant un capteur de position tel que décrit précédemment.

Pour ce faire, l'invention propose un dispositif magnétique de détection d'un couple entre un premier arbre et un deuxième arbre reliés par une barre de torsion, notamment destiné à une colonne de direction automobile, comprenant : un capteur de position tel que défini précédemment ; une première structure magnétique rotorique solidaire du premier arbre et comprenant une pluralité d'aimants orientés radialement ; une seconde structure statorique solidaire du deuxième arbre et comprenant deux couronnes prolongées de dents orientées axialement et imbriquées, et une troisième structure collectrice fixe constituée de deux pièces de fermeture de flux qui définissent au moins un entrefer dans lequel est placé au moins une troisième sonde magnéto sensible.

Selon des modes de réalisation avantageux :

- les première, deuxième et troisième sondes sont placées sur le même circuit imprimé ;

- l'unité aimantée est sous la forme d'une bague située autour des dents ;

- la pluralité d'aimants appartient à l'unité aimantée.

Cette construction permet ainsi d'obtenir un capteur de couple et de position absolu multitour dont l'encombrement axial et radial est identique à l'encombrement d'un capteur de couple seul en ajoutant uniquement un aimant et deux sondes et en réutilisant toutes les autres pièces du capteur de couple. Dans cette configuration l'aimant du capteur de couple et l'aimant du capteur de position sont concentriques et tous les éléments de hall sont situés dans le plan médian des aimants qui est perpendiculaire à l'axe de rotation des capteurs. Ceci a pour avantage de pouvoir insérer tous les éléments de hall sur un unique circuit imprimé et d'annuler l'interaction magnétique d'un capteur sur l'autre.

De plus, le coût d'un tel capteur intégré est réduit par la mise en commun des pièces qui le composent : L'aimant du capteur de position et les couronnes concentriques du capteur de couple peuvent être surmoulés en même temps et ne forment donc qu'une seule pièce, et de même pour les sondes de Hall du capteur de couple et de position qui font partie du même et unique circuit imprimé. Selon ce mode de réalisation préféré, on choisira la largeur angulaire des collecteurs égale ou K périodique à la largeur angulaire d'une période de l'aimant du capteur de position.

Ce mode de réalisation propose une solution capteur de couple et position multitour qui associe judicieusement le 1er mode de réalisation préféré a un capteur de couple magnétique comme par exemple celui décrit dans le brevet FR2872896 et en utilisant qu'un seul aimant commun pour les 2 capteurs. Ainsi, cet aimant serait la source du champ pour le capteur de couple et pour le capteur de position, tous les composants électroniques étant placés sur le même circuit imprimé. Dans cette configuration, il faut éloigner axialement les stators du capteur de couple pour que les première et deuxième sondes-puissent mesurer le champ engendré par l'aimant unique. L'encombrement axial est plus important mais cela permet de diminuer le coût du capteur en n'utilisant qu'un seul aimant

Au lieu d'éloigner les stators de couples l'un de l'autre, il est aussi possible d'allonger l'aimant du capteur de couple jusqu'à le faire dépasser axialement d'un ou des stators et de placer les première et deuxième sondes a sa périphérie. Cela permet d'avoir également un unique aimant mais avec l'inconvénient d'avoir 2 circuits imprimés distincts pour la sonde liée du capteur de couple et les sondes du capteur de position.

L'invention concerne également un dispositif magnétique de détection d'un couple entre un premier arbre et un deuxième arbre reliés par une barre de torsion, notamment destiné à une colonne de direction automobile, comprenant : un capteur de position tel que défini précédemment, une unité aimantée auxiliaire et un sonde magnétosensible auxiliaire ; l'unité aimantée du capteur de position étant solidaire du premier arbre de sorte que le capteur de position soit apte à délivrer des premières informations de position concernant une position angulaire θ1 de ce premier arbre ; l'unité aimantée auxiliaire étant solidaire du deuxième arbre et mobile vis-à-vis de la sonde magnétosensible auxiliaire, cette sonde auxiliaire étant apte à délivrer des deuxièmes informations de position concernant une position angulaire θ2 du deuxième arbre ; le dispositif comportant un module central apte à calculer une différence de position angulaire entre le premier arbre et le deuxième arbre à partir d'une combinaison des premières et deuxièmes informations de position, tel que :

$$\frac{GG_1B_{t1} - G_2B_{t2}}{GB_{n1} + B_{n2}} = -\tan(\frac{N}{2}(\Theta_1 - \Theta_2))$$

avec

- Bn1 la composante normale mesurée par la première sonde du champ généré par l'unité aimantée,
- Bn2 la composante normale mesurée par la sonde auxiliaire du champ généré par l'unité aimantée auxiliaire,
- Bt1 la composante tangentielle mesurée par la première sonde du champ généré par l'unité aimantée,
- Bt2 la composante tangentielle mesurée par la sonde auxiliaire du champ généré par l'unité aimantée auxiliaire.

Le calcul du couple se fera par l'intermédiaire de la mesure de l'angle relatif entre les deux arbres c'est-à-dire (θ1- θ2).

Etant donné que nous avons 2 aimants identiques qui engendrent une aimantation sinusoïdale périodique, on peut écrire:

- Bn1=|Bn|*Sin(N*θ1), Bt1=|Bt1|*Cos(N*θ1)
- Bn2=|Bn2|*Sin(N* θ2), Bt2=|Bt2|*Cos(N* θ2)

Sachant que :

$$\frac{\cos(\Theta_1) - \cos(\Theta_2)}{\sin(\Theta_1) + \sin(\Theta_2)} = -\tan(\frac{\Theta_1 - \Theta_2}{2}),$$

on peut donc en déduire l'angle relatif entre les deux arbres a l'aide de cette formule :

$$\frac{GG_1B_{t1} - G_2B_{t2}}{GB_{n1} + B_{n2}} = -\tan(\frac{N}{2}(\Theta_1 - \Theta_2))$$

Avec G, G1 et G2 tels que (égalité des normes): |Bn1|=G1*|Bt1| et |Bn2|=G2*|Bt2| et G|Bn1|=|Bn2|

Ce mode de réalisation permet donc, en ajoutant au capteur lié à l'arbre d'entrée qui est défini par le premier mode de réalisation, uniquement un aimant identique mais lié à l'arbre de sortie ainsi qu'une même première sonde de pouvoir obtenir un capteur de couple et de position multitour avec un nombre minimum de pièces. En effet, nous n'avons plus dans cette configuration besoin de stators et de collecteurs pour le capteur de couple qui étaient des pièces coûteuses.

**BREVE DESCRIPTION DES FIGURES**

D'autres caractéristiques et avantages de l'invention ressortiront à la lecture qui suit d'exemples de réalisation détaillés, en référence aux figures annexées qui représentent respectivement :

- la figure 1, le capteur de position selon un mode de réalisation préférentiel avec aimant bague;

- la figure 2, le capteur de position selon un second mode de réalisation avec un aimant disque;

- la figure 3, les signaux sinusoïdaux lus par la sonde (2) au voisinage de l'aimant (1) selon la figure 1 ou 2 ;

- la figure 4, le signal de position calculé sur une période de l'aimantation à partir des signaux visibles en figure 3 ;

- la figure 5, le signal de non-linéarité relatif au signal de position selon la figure 4;

- la figure 6, le signal de position donné par la sonde (2) sur 4 révolutions de l'aimant (1) ;

- la figure 7, le signal obtenu en sortie de la sonde (3) en fonction de la rotation de l'aimant (1) ;

- la figure 8, un capteur de déplacement linéaire suivant l'invention

- la figure 9, un capteur de déplacement angulaire inférieur à 360° suivant l'invention ;

- la figure 10, un capteur de couple de l'art antérieur pouvant être associé à un capteur de position selon l'invention ;

- la figure 11, l'association du capteur de couple selon la figure 10 et d'un capteur de position selon l'invention et la figure 1 et selon un premier mode de réalisation ;

- la figure 12, l'association du capteur de couple selon la figure 10 et d'un capteur de position selon l'invention et la figure 1 et selon un deuxième mode de réalisation ;

- la figure 13, l'association du capteur de couple selon la figure 10 et d'un capteur de position selon l'invention et la figure 1 et selon un troisième mode de réalisation ;

- la figure 14, un capteur de couple selon un quatrième mode de réalisation utilisant un capteur de position selon l'invention ;

- la figure 15, les éléments magnétiques d'un capteur de couple selon la figure 14.

**DESCRIPTION DETAILLEE DE MODES DE REALISATION**

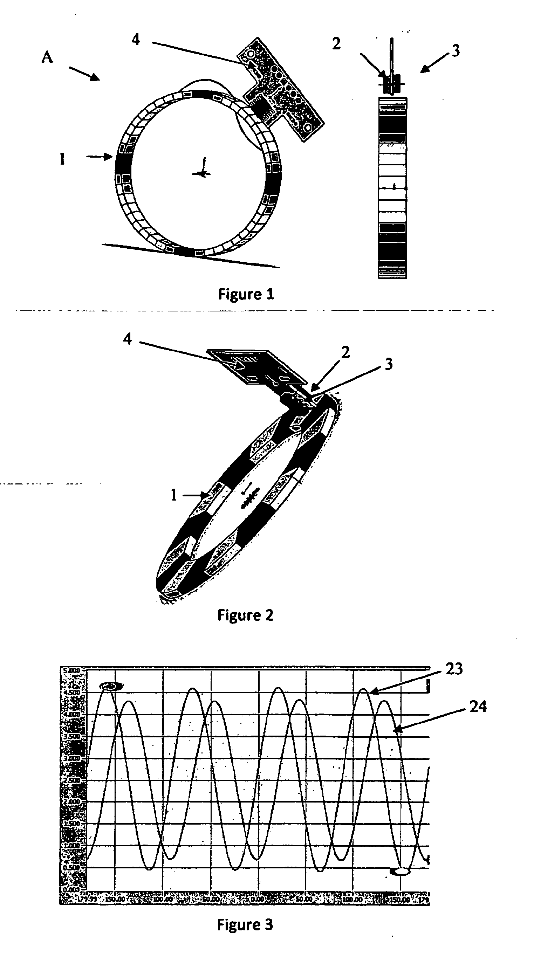

La figure 1 présente un capteur (A) de position mono ou multitour haute précision selon un premier mode de réalisation. Il est constitué d'un aimant (1) présentant plusieurs périodes d'aimantation. La direction de l'aimantation varie ainsi continûment suivant la direction de déplacement angulaire de l'aimant (1) et se répète, sur cet exemple non limitatif, 4 fois sur les 360° de l'aimant (1).

A proximité de l'aimant (1) est positionnée une première sonde (2), dites et placée sur un circuit imprimé (4), qui mesure la direction du champ magnétique généré par l'aimant (1) et non son amplitude. On peut par exemple envisager l'usage de sondes de type effet Hall telles que MLX90316, 2SA10, ou de type magnétorésistif (AMR, GMR,...). Au voisinage de cet aimant, cette aimantation engendre un champ magnétique dont les composantes sont sensiblement sinusoïdales.

La figure 3 montre, en fonction de la position -en degré-, l'évolution de l'amplitude -en volt- de la composante radiale (23) et la composante tangentielle (24) mesurées par la sonde (2) à partir d'un aimant et d'une aimantation tels que montrés sur la figure1.

A partir des 2 signaux sinusoïdaux mesurés, il est possible de connaître la position linéaire de l'aimant, en appliquant la formule suivante :

$$\Theta = ATAN\left(G\frac{Bt}{Bn}\right)$$

où

- θ est la position angulaire,
- Bt est la composante tangentielle du champ magnétique,
- Bn est la composante normale du champ magnétique et
- G un gain correctif.

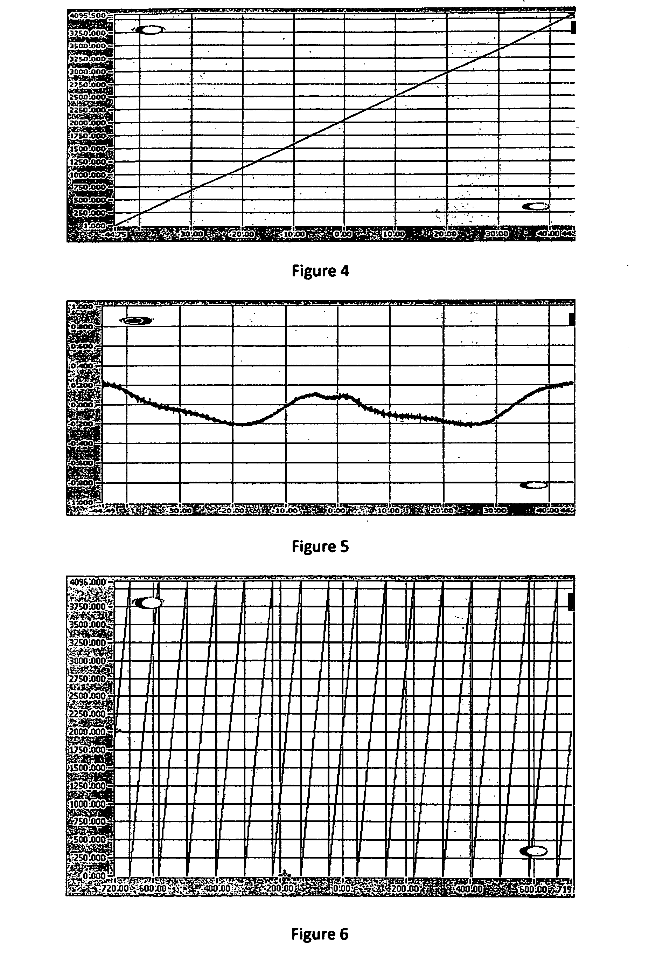

En appliquant cette formule aux signaux mesurés de la figure 2, on obtient, tel que montré en figure 4, un signal de sortie, exprimé ici en volt, linéaire en fonction de la position, exprimée ici en degré, et périodique de période 90°.

Comme on peut le voir sur la figure 5, montrant l'évolution, en pourcent, de la non-linéarité en fonction de la position, exprimée en degré, le signal obtenu présente une très bonne linéarité sur une période de 90°. A titre d'exemple, la valeur typique est d'environ 0.3%, ce qui correspond à 0.27°.

Dans le cas de la figure 1, si nous considérons 4 périodes d'aimantation, le signal de sortie se répétera donc 4 fois par tour. En considérant une rotation de 4 tours de l'aimant (1), on va ainsi avoir un motif, tel que présenté en figure 4, qui se répète 16 fois comme montré en figure 6, montrant l'évolution du signal, exprimé en volt, en fonction de la position exprimée en degré.

Puisque le motif répété est toujours identique à l'intérieur de ces 16 périodes obtenues, il n'est pas possible de déduire la position angulaire de l'aimant. Cette fonction est rendue possible par l'utilisation d'une sonde incrémentale absolue (3), présentée en figure 1 et placée avantageusement sur le même circuit imprimé (4) supportant la sonde (2), à proximité de l'aimant (1). Cette sonde incrémentale absolue (3) permet de déterminer dans quelle portion linéaire on se trouve, en utilisant toujours le même aimant (1).

Cette sonde incrémentale absolue (3) permet de détecter, de manière absolue, le nombre de rotations effectuées par le champ magnétique de l'aimant (1) que la sonde incrémentale absolue (3) soit alimentée ou non en courant électrique. La détection est ainsi réalisée par modification des propriétés physiques de la sonde incrémentale absolue (3).

La sonde incrémentale absolue (3) est limitée par le nombre Nr de rotation complète du champ qu'il peut distinguer. Par exemple, s'il est intégré en face d'un aimant avec plusieurs périodes d'aimantation Npp, ce composant délivrera un signal discret (Nr valeurs) et sera périodique de période Nr/Npp.

Ainsi, par exemple à partir de l'aimant de la figure 1, le signal de sortie de la sonde incrémentale absolue (3), en supposant qu'il est limité a 16 rotations complète du champ magnétique, présente une tension de sortie différente tous les 90°(360/4) et est périodique de période 4 tours (16/4pp=4 tours) comme le montre la figure 7 qui décrit l'évolution du signal, en volt, en fonction de la position, exprimée en degré

A partir d'un aimant (1) avec une direction d'aimantation qui varie continûment sur une période de 90°, on obtient donc un capteur de position multitour (4 tours dans le cas de la figure 1) avec une précision typique de l'ordre de 0.2°.

Cet exemple de réalisation n'est nullement limitatif. Ainsi, la présente invention peut se décliner de différentes manières et notamment en utilisant un aimant (1) sous la forme d'un disque comme montré en figure 2. L'aimant (1) disque présente une alternance de pôles aimantés Nord-Sud suivant plusieurs périodes sur les 360° de l'aimant. Dans ce mode de réalisation, la direction de l'aimantation est perpendiculaire à la surface du disque.

De même, on peut imaginer des variantes linéaires, comme par exemple décrit en figure 8, où l'on peut voir un aimant (1) présentant une direction d'aimantation continument variable sur plusieurs périodes. On retrouve, placées sur un même circuit imprimé (4), la sonde (2) qui mesure la direction des champs normal (ou axial) et tangentiel afin de déduire la position de l'aimant (1) à l'intérieur d'une période et la sonde incrémentale absolue (3) qui compte le nombre de rotation du champ magnétique c'est-à-dire le nombre de périodes du champ magnétique. La combinaison des deux signaux permet ainsi de générer un capteur de position de très grande précision.

De même encore, la figure 9 montre une variante rotative sous la forme d'un arc ou tuile d'aimant (1) qui présente une alternance de pôles aimantés Nord-Sud de direction d'aimantation radiale, un circuit imprimé (4) supportant les deux sondes (2 et 3). En réalisant une tuile de largeur angulaire limitée et en multipliant le nombre de période d'aimantation, on peut ainsi augmenter la précision du capteur obtenu.

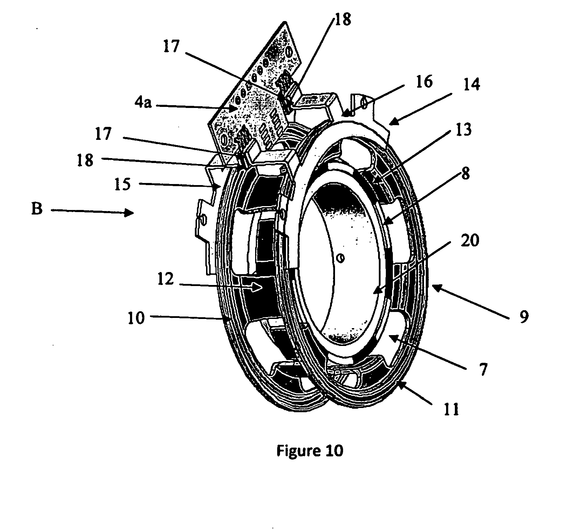

La présente invention est particulièrement pertinente dans le cadre d'une association du capteur de position (A) avec un capteur de couple (B), tel que décrit par exemple dans la demande de brevet FR2872896 déposé par la demanderesse et présenté en figure 10.

Ce capteur de couple (B) permet de détecter la rotation relative de deux arbres (5 et 6) reliés par une barre de torsion (19) et est composé de :

- une première structure magnétique rotorique (7) comprenant une pluralité d'aimants (8) fixés sur une culasse (20) et aimantés radialement ;

- une seconde structure magnétique statorique (9) comprenant deux couronnes concentriques (10,11) présentant une pluralité de dents imbriquées (12,13) et s'étendant axialement ;

- une troisième structure collectrice fixe (14) constituée de deux pièces de fermeture de flux (15,16) prolongées de branches (21,22) se refermant pour former deux entrefers de mesure (17) où sont placés deux éléments magnéto sensible (18). Cette configuration doublée sert à assurer une fonction de redondance, mais un seul entrefer avec un seul élément magnétosensible est envisageable.

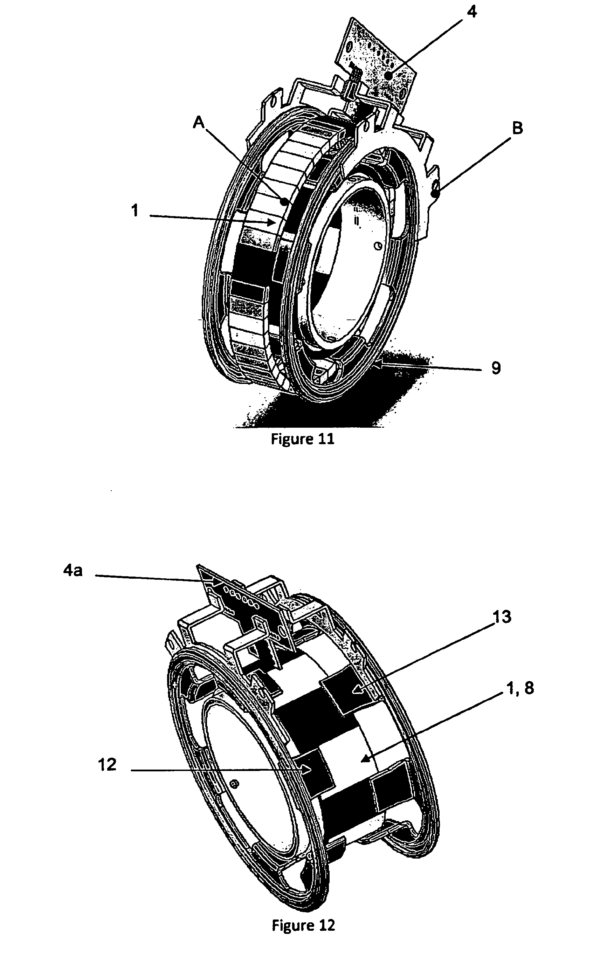

Associé avec le capteur de position (A), il se compose alors, comme montré en figure 11, d'une quatrième structure composée d'un aimant aimanté multipolaire (1) avec une direction d'aimantation continûment variable qui peut être surmoulé sur la pièce pastique (non montrée) qui supporte la seconde structure magnétique (9) du capteur de couple (B). Il y a aussi présence d'un circuit imprimé (4a) supportant la sonde (2), la sonde incrémentale absolue (3) nécessaire au fonctionnement du capteur de position (A) et la troisième sonde magnétosensible (18) qui mesure l'amplitude du champ pour utilisation du capteur de couple (B).

Dans cette configuration selon la figure 11, l'aimant multipolaire (1) à direction d'aimantation continûment variable est solidaire de la structure statorique (9). Ce nouveau capteur présente le même encombrement qu'un capteur de couple traditionnel mais il mesure en plus la position angulaire de l'arbre (6) qui est solidaire de la partie statorique (9) et ce de façon absolue et sur plusieurs tours.

La figure 12 présente une autre association envisageable du capteur de position (A) avec un capteur de couple (B) tel que décrit précédemment. Dans ce mode de réalisation, l'aimant (8) est multipolaire à aimantation radiale. Ainsi, cet aimant (1) est la source du champ pour le capteur de couple (B) et pour le capteur de position (A), toutes les sondes (2,3,18) étant placées sur le même circuit imprimé (4a). Ceci a pour avantage de n'avoir plus qu'un seul aimant (1) avec cependant pour inconvénient d'augmenter l'encombrement axial.

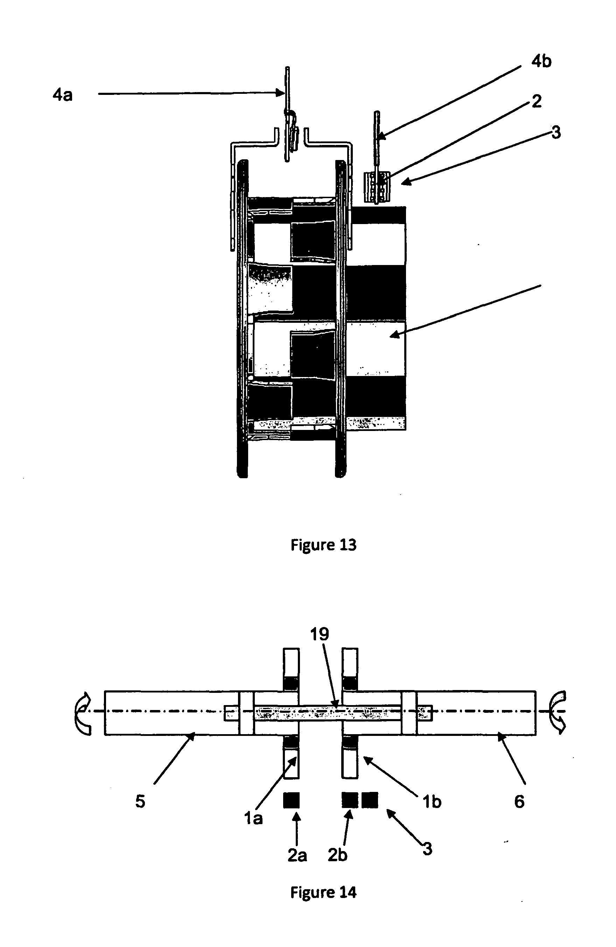

Si l'influence des dents (12 et 13) du capteur de couple peut être préjudiciable au bon fonctionnement du capteur de position, on peut alors envisager une autre variante de réalisation, comme représenté en figure 13, où l'aimant unique (1, 8) est réalisé dépassant de l'ensemble statorique (9) afin de placer les sondes (2 et 3) sur un autre circuit imprimé (4b). L'ensemble permet ainsi d'assurer une insensibilité du capteur de position (A) au capteur de couple (B).

La figure 14 présente enfin un capteur de couple et de position innovant toujours basé sur l'utilisation d'un capteur de position (A) comme présenté en figure 1.

Dans ce mode de réalisation, on utilise deux aimants multipolaires (1 a et 1 b) à direction d'aimantation continûment variable.

Sur une colonne de direction, l'arbre d'entrée (5) et l'arbre de sortie (6) sont liés par une barre de torsion (19), ce qui signifie que nous pouvons déduire le couple de torsion à partir de la mesure d'angle entre l'arbre d'entrée (5) et l'arbre de sortie (6). La présente invention se propose d'intégrer sur chaque arbre (5 et 6) un aimant multipolaire à direction d'aimantation (respectivement 1a et 1b) continûment variable avec N paires de pole et 1 sonde magnétosensible (respectivement 2a et 2b) qui mesure les composantes radiale (ou axiale) et tangentielle du champ magnétique généré en face de chaque aimant (1a et 1b) et 1 sonde incrémentale absolue (3) absolue en face d'un aimant (1b) lié soit à l'arbre d'entrée (5), soit à l'arbre de sortie (6).

Dans ce mode de réalisation, la différence de position angulaire entre le premier arbre (5), de position θ1, et le deuxième arbre (6), de position θ2, est déterminée par une combinaison des signaux des sondes (2a et 2b) telle que :

$$\frac{GG_1 B_{t1} - G_2 B_{t2}}{GB_{n1} + B_{n2}} = -\tan(\frac{N}{2}(\Theta_1 - \Theta_2))$$

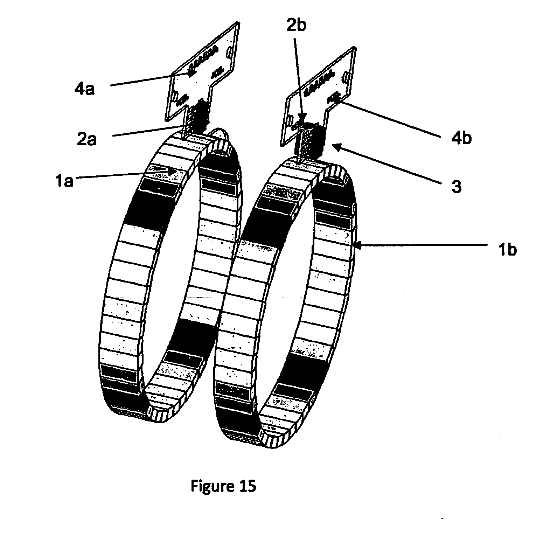

Les paramètres de cette équation sont déjà décrits dans le texte ci-dessus. Dans ce mode de réalisation, la sonde (2a) est placée sur un premier circuit imprimé (4a) et les sondes (2b et 3) sont placées sur un second circuit imprimé (4b) comme montré en figure 15.

**Revendications**

1. Capteur magnétique de position (A), comportant au moins une unité aimantée (1), une première sonde magnétosensible (2) et une deuxième sonde magnétosensible (3) ;

   les première et deuxième sondes magnétosensibles (2, 3) étant fixes l'une par rapport à l'autre ;

   l'unité aimantée (1) étant mobile vis-à-vis de ces première et deuxième sondes magnétosensibles (2, 3) sur une course de déplacement et présentant à chaque instant une position absolue ;

   ladite unité aimantée (1) produisant au voisinage de ladite première sonde magnétosensible (2) un champ magnétique présentant une composante normale d'une part, et au moins une composante tangentielle ou transversale d'autre part, variant de façon sinusoïdale et périodique sur N périodes réparties sur la course de déplacement, N étant un nombre supérieur à 1 ;

   ladite première sonde magnétosensible (2) étant apte à mesurer au moins deux des trois composantes du champ magnétique de sorte à déterminer une première donnée relative à la position de l'unité aimantée (1) ;

   **caractérisé en ce que** la deuxième sonde magnétosensible (3) est apte à mesurer de manière absolue, incrémentale et réversible un nombre de rotations complètes du champ magnétique de sorte à déterminer une deuxième donnée relative à la position de l'unité aimanté (1), que cette deuxième sonde magnétosensible (3) soit alimentée ou non ;

   le capteur comportant un module de calcul de la position absolue de l'unité aimanté (1) à partir des première et deuxième données.

2. Capteur magnétique de position (A) selon la revendication 1 **caractérisé en ce que** l'unité aimantée (1) présente une direction d'aimantation variable de façon continue suivant la direction de déplacement.

3. Capteur magnétique de position (A) selon la revendication 2 **caractérisé en ce que** l'unité aimantée (1) présente une direction d'aimantation variant linéairement suivant la direction de déplacement.

4. Capteur magnétique de position (A) selon la revendication 1 **caractérisé en ce que** l'unité aimantée (1) présente une alternance de pôles aimantés Nord-Sud.

5. Capteur magnétique de position (A) selon la revendication 1 **caractérisé en ce que** l'unité aimantée (1) présente une aimantation unidirectionnelle et présente au moins une de ses dimensions qui varie de façon non constante.

6. Capteur magnétique rotatif de position (A) selon l'une des revendications 1 à 5 **caractérisé en ce que** l'unité aimantée (1) présente une forme annulaire et une direction d'aimantation dans le plan perpendiculaire à l'axe de rotation de l'unité aimantée (1).

7. Capteur magnétique rotatif de position (A) selon l'une des revendications 1 à 5 **caractérisé en ce que** ladite unitée aimantée (1) présente une forme de disque et une direction d'aimantation perpendiculaire au plan du disque.

8. Capteur magnétique rotatif de position (A) selon l'une des revendications 1 à 5 **caractérisé en ce que** ladite unité aimantée (1) présente une forme s'étendant sur une largeur angulaire inférieure à 360°.

9. Capteur magnétique linéaire de position (A) selon l'une des revendications 1 à 5 **caractérisé en ce que** ladite unité aimantée (1) s'étend linéairement suivant la direction de déplacement.

10. Capteur magnétique de position (A) selon l'une des revendications 1 à 9 **caractérisé en ce que** les première et deuxième sondes magnétosensibles (2, 3) sont positionnées sur un seul et même circuit imprimé (4).

11. Dispositif magnétique de détection d'un couple entre un premier arbre et un deuxième arbre reliés par une barre de torsion, notamment destiné à une colonne de direction automobile, comprenant :

    un capteur de position (A) tel que défini selon l'une des revendications 1 à 10;
    une première structure magnétique rotorique (7) solidaire du premier arbre et comprenant une pluralité d'aimants (8) orientés radialement,
    une seconde structure statorique (20) solidaire du deuxième arbre et comprenant deux couronnes (10, 11) prolongées de dents (12, 13) orientées axialement et imbriquées, et
    une troisième structure collectrice (14) fixe constituée de deux pièces de fermeture de flux (15, 16) qui définissent au moins un entrefer (18) dans lequel est placé au moins une troisième sonde magnéto sensible (17).

**12.** Dispositif magnétique de détection selon la revendication 11, dans lequel les première, deuxième et troisième sondes (2, 3, 17) sont placées sur le même circuit imprimé (4a).

**13.** Dispositif magnétique de détection selon la revendication 11 ou 12, dans lequel l'unité aimantée (1) est sous la forme d'une bague située autour des dents (12, 13).

**14.** Dispositif magnétique de détection selon la revendication 11 ou 12, dans lequel la pluralité d'aimants (8) appartient à l'unité aimantée (1).

**15.** Dispositif magnétique de détection d'un couple entre un premier arbre et un deuxième arbre reliés par une barre de torsion, notamment destiné à une colonne de direction automobile, comprenant :

un capteur de position (A) tel que défini selon l'une des revendications 1 à 10, une unité aimantée auxiliaire (1b) et un sonde magnétosensible auxiliaire (2b) ;
l'unité aimantée (1a) du capteur de position (A) étant solidaire du premier arbre (5) de sorte que le capteur de position (A) soit apte à délivrer des premières informations de position concernant une position angulaire θ1 de ce premier arbre (5) ;
l'unité aimantée auxiliaire (1b) étant solidaire du deuxième arbre (6) et mobile vis-à-vis de la sonde magnétosensible auxiliaire (2b), cette sonde auxiliaire (2b) étant apte à délivrer des deuxièmes informations de position concernant une position angulaire θ2 du deuxième arbre (6) ;
le dispositif comportant un module central apte à calculer une différence de position angulaire entre le premier arbre (5) et le deuxième arbre (6) à partir d'une combinaison des premières et deuxièmes informations de position, tel que :

$$\frac{GG_1 B_{t1} - G_2 B_{t2}}{GB_{n1} + B_{n2}} = -\tan(\frac{N}{2}(\Theta_1 - \Theta_2))$$

Avec

- Bn1 la composante normale mesurée par la première sonde (2a) du champ généré par l'unité aimantée (1a),
- Bn2 la composante normale mesurée par la sonde auxiliaire (2b) du champ généré par l'unité aimantée auxiliaire (1b),
- Bt1 la composante tangentielle mesurée par la première sonde (2a) du champ généré par l'unité aimantée (1a),
- Bt2 la composante tangentielle mesurée par la sonde auxiliaire (2b) du champ généré par l'unité aimantée auxiliaire (1b),
- |Bn1|=G1*|Bt1|, |Bn2|=G2*|Bt2|, et G|Bn1|=|Bn2|.

**Patentansprüche**

**1.** Magnetischer Positionssensor (A), umfassend wenigstens eine magnetisierte Einheit (1), eine erste magnetisch sensible Sonde (2) und eine zweite magnetisch sensible Sonde (3);
wobei die erste und zweite magnetisch sensiblen Sonden (2, 3) im Verhältnis zueinander fest sind;
wobei die magnetisierte Einheit (1) gegenüber diesen ersten und zweiten magnetisch sensiblen Sonden (2, 3) auf einem Verschiebungslauf mobil sind und zu jedem Zeitpunkt eine absolute Position aufweisen;
wobei die genannte magnetisierte Einheit (1) in der Nachbarschaft der genannten ersten magnetisch sensiblen Sonde (2) ein Magnetfeld erzeugt, das eine normale Komponente aufweist, einerseits, und wenigstens eine tangentiale oder transversale Komponente andererseits, die sinusförmig und periodisch über N Perioden variiert, die auf dem Verschiebungslauf verteilt sind, wobei N eine Zahl größer als 1 ist;
wobei die genannte erste magnetisch sensible Sonde (2) geeignet ist, wenigstens zwei der drei Komponenten des magnetischen Feldes derart zu messen, dass eine erste Angabe relativ zur Position der magnetisierten Einheit (1) bestimmt wird;
**dadurch gekennzeichnet, dass** die zweite magnetisch sensible Sonde (3) geeignet ist, auf absolute, inkrementale und reversible Weise eine Anzahl von kompletten Rotationen des Magnetfeldes derart zu messen, dass eine zweite Angabe relativ zur Position der magnetisierten Einheit (1) bestimmt wird, ganz gleich, ob diese zweite magnetisch sensible Sonde (3) versorgt ist oder nicht;
wobei der Sensor ein Berechnungsmodul der absoluten Position der magnetisierten Einheit (1) ab den ersten und zweiten Angaben umfasst.

2. Magnetischer Positionssensor (A) gemäß Anspruch 1, **dadurch gekennzeichnet, dass** die magnetisierte Einheit (1) eine variable Magnetisierungsrichtung auf kontinuierliche Weise gemäß der Verschiebungsrichtung aufweist.

3. Magnetischer Positionssensor (A) gemäß Anspruch 2, **dadurch gekennzeichnet, dass** die magnetisierte Einheit (1) eine Magnetisierungsrichtung aufweist, die linear gemäß der Verschiebungsrichtung variiert.

4. Magnetischer Positionssensor (A) gemäß Anspruch 1, **dadurch gekennzeichnet, dass** die magnetisierte Einheit (1) ein Alternieren von magnetisierten Polen Nord-Süd aufweist.

5. Magnetischer Positionssensor (A) gemäß Anspruch 1, **dadurch gekennzeichnet, dass** die magnetisierte Einheit (1) eine Magnetisierung in einer Richtung aufweist und wenigstens eine ihrer Abmessungen aufweist, die auf nicht konstante Weise variiert.

6. Rotierender magnetischer Positionssensor (A) gemäß Anspruch 1 bis 5, **dadurch gekennzeichnet, dass** die magnetisierte Einheit (1) eine ringförmige Form und eine Magnetisierungsrichtung in der lotrechten Ebene zur Rotationsachse der magnetisierten Einheit (1) aufweist.

7. Rotierender magnetischer Positionssensor (A) gemäß Anspruch 1 bis 5, **dadurch gekennzeichnet, dass** die genannte magnetisierte Einheit (1) eine Scheibenform und eine zur Ebene der Scheibe lotrechte Magnetisierungsrichtung aufweist.

8. Rotierender magnetischer Positionssensor (A) gemäß Anspruch 1 bis 5, **dadurch gekennzeichnet, dass** die genannte magnetisierte Einheit (1) eine Form aufweist, die sich auf einer Winkelbreite von weniger als 360° erstreckt.

9. Linearer magnetischer Positionssensor (A) gemäß Anspruch 1 bis 5, **dadurch gekennzeichnet, dass** die genannte magnetisierte Einheit (1) sich linear gemäß der Verschiebungsrichtung erstreckt.

10. Magnetischer Positionssensor (A) gemäß Anspruch 1 bis 9, **dadurch gekennzeichnet, dass** die ersten und zweiten magnetisch sensiblen Sonden (2, 3) auf einer und derselben bestückten Leiterplatte (4) positioniert sind.

11. Magnetische Erfassungsvorrichtung eines Moments zwischen einer ersten Welle und einer zweiten Welle, die durch einen Drehstab verbunden sind, der insbesondere für eine Automobillenkstange bestimmt ist, umfassend:

einen Positionssensor (A) wie in Anspruch 1 bis 10 definiert;
eine erste magnetische Rotorstruktur (7), die an der ersten Welle fest befestigt ist und eine Vielzahl von radial ausgerichteten Magneten (8) hat,
eine zweite Statorstruktur (20), die fest an der zweiten Welle befestigt ist und zwei Kronen (10, 11) umfasst, die durch axial ausgerichtete und verschachtelte Zähne (12, 13) verlängert sind, und
eine dritte feste Auffangstruktur (14), die aus zwei Verschlussteilen des Stroms (15, 16) gebildet ist, die wenigstens einen Luftspalt (18) definieren, in dem wenigstens eine dritte magnetisch sensible Sonde (17) platziert ist.

12. Magnetische Erfassungsvorrichtung gemäß Anspruch 11, bei der die ersten, zweiten und dritten Sonden (2, 3, 17) auf derselben bestückten Leiterplatte (4a) platziert sind.

13. Magnetische Erfassungsvorrichtung gemäß Anspruch 11 oder 12, bei der die magnetisierte Einheit (1) die Form eines Rings aufweist, der sich rund um die Zähne (12, 13) befindet.

14. Magnetische Erfassungsvorrichtung gemäß Anspruch 11 oder 12, in der die Vielzahl von Magneten (8) zur magnetisierten Einheit (1) gehört.

15. Magnetische Erfassungsvorrichtung eines Moments zwischen einer ersten Wellen und einer zweiten Welle, die durch einen Drehstab verbunden sind, der insbesondere für eine Automobil-Lenkstange bestimmt ist, umfassend:

einen Positionssensor (A), wie gemäß Anspruch 1 bis 10 definiert, eine magnetisierte Hilfseinheit (1b) und eine magnetisch sensible Hilfssonde (2b);

wobei die magnetisierte Einheit (1a) des Positionssensors (A) an der ersten Welle (5) derart fest befestigt ist, dass der Positionssensor (A) geeignet ist, die ersten Positionsinformationen bezüglich einer Winkelposition 01 dieser ersten Welle (5) auszugeben;

wobei die magnetisierte Hilfseinheit (1b) fest an der zweiten Welle (6) befestigt und gegenüber der magnetisch sensiblen Hilfssonde (2b) mobil ist, wobei diese Hilfssonde (2b) geeignet ist, zweite Positionsinformationen hinsichtlich einer Winkelposition 02 der zweiten Welle (6) auszugeben;

wobei die Vorrichtung ein zentrales Modul umfasst, das geeignet ist, eine Differenz der Winkelposition zwischen der ersten Welle (5) und der zweiten Welle (6) ausgehend von einer Kombination der ersten und zweiten Positionsinformationen zu berechnen, wie z. B.

$$\frac{GG_1B_{t1} - G_2B_{t2}}{GB_{n1} + B_{n2}} \equiv -\tan(\frac{N}{2}(\Theta_1 - \Theta_2))$$

Wobei

- Bn1 die normale Komponente ist, die von der ersten Sonde (2a) des durch die magnetisierte Einheit (1a) generiertes Feld gemessen wird,
- Bn2 die normale Komponente ist, die von der Hilfssonde (2b) des durch die magnetisierte Hilfseinheit (1b) generierten Feldes gemessen wird,
- Bt1 die Tangentialkomponente ist, die von der ersten Sonde (2a) des durch die magnetisierte Einheit (1a) generierten Feldes gemessen wird,
- Bt2 die Tagentialkomponente ist, die durch die Hilfssonde (2b) des durch die magnetisierte Hilfssonde (1b) generierten Feldes gemessen wird.
- |Bn1|=G1*|Bt1|,|Bn2|=G2*|Bt2|, und G|Bn1|=|Bn2|

## Claims

1. A magnetic position sensor (A) comprising at least one magnetised unit (1), a first magnetosensitive probe (2) and a second magnetosensitive probe (3);

   the first and second magnetosensitive probes (2, 3) being fixed with respect to each other;

   the magnetised unit (1) being able to move vis-à-vis these first and second magnetosensitive probes (2, 3) on a movement travel and having an absolute position at each moment;

   said magnetised unit (1) producing, in the vicinity of said first magnetosensitive probe (2), a magnetic field having firstly a normal component and secondly at least one tangential or transverse component, varying sinusoidally and periodically over N periods distributed over the movement travel, N being a number greater than 1;

   said first magnetosensitive probe (2) being able to measure at least two of the three components of the magnetic field so as to determine a first data item relating to the position of the magnetised unit (1);

   **characterised in that** the second magnetosensitive probe (3) is able to measure absolutely, incrementally and reversibly a number of complete rotations of the magnetic field so as to determine a second data item relating to the position of the magnetised unit (1), whether or not this second magnetosensitive probe (3) being powered;

   the sensor comprising a module for calculating the absolute position of the magnetised unit (1) from the first and second data items.

2. A magnetic position sensor (A) according to claim 1, **characterised in that** the magnetised unit (1) has a direction of magnetisation that is variable continuously along the movement direction.

3. A magnetic position sensor (A) according to claim 2, **characterised in that** the magnetised unit (1) has a magnetisation direction varying linearly along the movement direction.

4. A magnetic position sensor (A) according to claim 1, **characterised in that** the magnetised unit (1) has an alternation of North-South magnetised poles.

5. A magnetic position sensor (A) according to claim 1, **characterised in that** the magnetised unit (1) has a unidirectional magnetisation and has at least one of its dimensions varying in a non-constant fashion.

6. A rotary magnetic position sensor (A) according to one of claims 1 to 5, **characterised in that** the magnetised unit (1) has an annular form and a magnetisation direction in the plane perpendicular to the rotation axis of the magnetised unit (1).

7. A rotary magnetic position sensor (A) according to one of claims 1 to 5, **characterised in that** said magnetised unit (1) has a disc shape and a magnetisation direction perpendicular to the plane of the disc.

8. A rotary magnetic position sensor (A) according to one of claims 1 to 5, **characterised in that** said magnetised unit (1) has a form extending over an angular width of less than 360°C.

9. A linear magnetic position sensor (A) according to one of claims 1 to 5, **characterised in that** said magnetised unit (1) extends linearly in the movement direction.

10. A magnetic position sensor (A) according to one of claims 1 to 9, **characterised in that** the first and second magnetosensitive probes (2, 3) are positioned on one and the same printed circuit (4).

11. A magnetic device for detecting a torque between a first shaft and a second shaft connected together by a torsion bar, in particular intended for an automobile steering column, comprising:

a position sensor (A) as defined according to one of claims 1 to 10;
a first magnetic rotor structure (7) secured to the first shaft and comprising a plurality of radially oriented magnets (8),
a second stator structure (20) secured to the second shaft and comprising two rings (10, 11) extended by axially oriented and interlocking teeth (12, 13), and
a third fixed collecting structure (14) consisting of two flux closure pieces (15, 16) that define at least one air gap (18) in which at least one third magnetosensitive probe (17) is placed.

12. A magnetic detection device according to claim 11, in which the first, second and third probes (2, 3, 17) are placed on the same printed circuit (4a).

13. A magnetic detection device according to claim 11 or 12, in which the magnetised unit (1) is in the form of a ring situated around teeth (12, 13).

14. A magnetic detection device according to claim 11 or 12, in which the plurality of magnets (11) belong to the magnetised unit (1).

15. A magnetic device for detecting a torque between a first shaft and a second shaft connected together by a torsion bar, in particular intended for an automobile steering column, comprising:

a position sensor (A) as defined according to one of claims 1 to 10, an auxiliary magnetised unit (1b) and an auxiliary magnetosensitive probe (2b);
the magnetised unit (a) of the position sensor (A) being secured to the first shaft (5) so that the position sensor (A) is able to deliver first position information concerning an angular position θ1 of this first shaft (5);
the auxiliary magnetised unit (1b) being secured to the second shaft (6) and able to move vis-à-vis the auxiliary magnetosensitive probe (2b), this auxiliary probe (2b) being able to deliver second position information concerning an angular position θ2 of the second shaft (6);
the device comprising a central module able to calculate a difference in angular position between the first shaft (5) and the second shaft (6) from a combination of the first and second items of position information, such that:

$$\frac{GG_1 B_{t1} - G_2 B_{t2}}{GB_{n1} + B_{n2}} = -\tan\left(\frac{N}{2}(\Theta_1 - \Theta_2)\right)$$

with

- Bn1 the normal component, measured by the first probe (2a), of the field generated by the magnetised unit (a),
- Bn2 the normal component, measured by the auxiliary probe (2b), of the field generated by the auxiliary magnetised unit (1b),
- Bt1 the tangential component, measured by the first probe (2a), of the field generated by the magnetised unit (1a),
- Bt2 the tangential component, measured by the auxiliary probe (2b), of the field generated by the auxiliary magnetised unit (1b),
- $|Bn1| = G1*|Bt1|, |Bn2| = G2*|Bt2|$, and $G|Bn1| = |Bn2|$

Figure 1

Figure 2

Figure 3

Figure 4

Figure 5

Figure 6

Figure 7

Figure 8

Figure 9

Figure 10

Figure 11

Figure 12

Figure 13

Figure 14

Figure 15

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 07014599 A
- EP 1167927 A
- EP 1219527 A
- US 6848187 B
- US 6384598 B
- US 5200747 A
- US 2005000288286 A
- JP 2006119082 A
- US 6941241 B
- US 5930905 A
- US 6466889 B
- US 20030145663 A
- EP 1353151 A
- US 6515571 B
- US 7215112 B

- WO 2008101702 A
- WO 2005076860 A
- WO 2007057563 A
- WO 2009047401 A
- DE 102007039051
- US 20060236784 A
- WO 9911999 A
- US 2008150519 A
- EP 1203932 A
- DE 102006032266
- EP 1532425 B1
- EP 1740909 B1
- FR 2898189
- FR 2909170
- FR 2872896